# EUROPEAN PATENT APPLICATION

(11) **EP 4 557 410 A1**
(43) Date of publication of application: **21.05.2025**
(21) Application number: 23838685.8
(22) Date of filing: 27.06.2023
(51) Int. Cl.: H01M 6/16

(54) **ELECTROLYTE SUITABLE FOR LITHIUM PRIMARY BATTERY**

(30) Priority: 15.07.2022 CN 202210835264
(71) Applicant: Zhangjiagang Guotai-Huarong New Chemical Materials Co., Ltd, Suzhou, Jiangsu 215600 (CN)
(72) Inventor: CAI, Wei, Suzhou, Jiangsu 215600 (CN); QIAN, Jiahui, Suzhou, Jiangsu 215600 (CN); ZHANG, Yin, Suzhou, Jiangsu 215600 (CN); HUI, Yinyin, Suzhou, Jiangsu 215600 (CN); SUN, Cao, Suzhou, Jiangsu 215600 (CN); GAN, Chaolun, Suzhou, Jiangsu 215600 (CN)
(74) Representative: De Vries & Metman
(86) International application number: PCT/CN2023/102589
(87) International publication number: WO 2024/012191

(57) **Abstract**

The present invention relates to an electrolyte suitable for lithium primary batteries. In order to solve the problems of poor safety performance, high-rate discharge performance and discharge performance of electrolytes for conventional lithium primary batteries under high temperature, the electrolyte according to the present invention includes an electrolyte lithium salt, an additive and an organic solvent, where the electrolyte lithium salt includes one or more of lithium trifluoromethanesulfonate, lithium bis(trifluoromethanesulfonyl)imide, lithium difluorophosphate and lithium difluoro(oxalato)borate; the additive includes one or more of 2-trimethylsilylethyl2-cyanoacetate, diphenyldimethoxysilane and citraconic anhydride; and the organic solvent includes a carbonate solvent and an glycol ether solvent. Through the selection and combination of the electrolyte lithium salt, the additive and the solvent, the electrolyte can meet the requirement of normal-temperature discharge when applied in lithium primary batteries, so that lithium primary batteries can have normal-and-high-temperature performance, high-rate discharge performance and safety performance, and therefore, lithium primary batteries can be better popularized and applied.

## Description

### TECHNICAL FIELD

The present invention belongs to the technical field of lithium primary batteries, and particularly relates to an electrolyte suitable for lithium primary batteries.

### BACKGROUND

With the development of science and technology, the lithium primary battery has become a key auxiliary product and an important technical basis for weapons and electronic devices, and is one of the important factors restricting their development. Every country attaches great importance to the development of lithium primary batteries. For example, the US Department of Defense studies and develops energy technology (including battery technology) as key defense technology and typical dualuse technology. Many types of lithium primary batteries have been applied in the existing weapons and electronic devices. According to different cathode materials, lithium primary batteries are mainly divided into lithium-sulfur dioxide batteries, lithium-thionyl chloride batteries, lithium-manganese dioxide batteries, lithium-iron disulfide batteries, lithium-carbon fluoride batteries, etc.

The lithium-manganese dioxide battery (Li/MnO₂) is the first commercialized lithium/solid cathode battery and the most widely applied lithium primary battery, and its actual specific energy is above 260 to 400 Wh/kg. The rated voltage of this type of battery is higher than 3 V, the working voltage plateau is about 2.7 V, the working temperature range is -40 to 75 °C, and the storage life is longer than 10 years. The lithium-manganese dioxide battery adopts manganese dioxide as a cathode, and mostly adopts a mixture of lithium perchlorate and a variety of organic solvents as an electrolyte, and its structure types mainly include button batteries, cylindrical batteries, square batteries and pouch batteries.

The conventional electrolyte lithium salt applied in lithium-manganese dioxide batteries is lithium perchlorate, which has been classified as an explosive chemical due to its strong oxidizing property, and also has potential safety hazards at high temperature in practical application and the disadvantages of unsatisfactory high-temperature discharge performance, limited high-rate discharge performance and limited conductivity.

In view of this, it is urgent to provide an electrolyte suitable for lithium primary batteries, so that lithium primary batteries can have normal-and-high-temperature performance, high-rate discharge performance and safety performance and therefore can be better popularized and applied.

### SUMMARY OF THE INVENTION

The objective of the present invention is to provide an electrolyte suitable for lithium primary batteries, which not only has excellent discharge performance under normal temperature, but also can increase the high-temperature performance, high-rate discharge performance and safety performance of lithium primary batteries.

Another objective of the present invention is to provide a lithium primary battery with excellent normal-and-high-temperature performance and high-rate discharge performance.

In order to achieve the aforementioned objectives, the technical solution adopted by the present invention is as follows:
An electrolyte suitable for lithium primary batteries includes a electrolyte lithium salt, an additive and an organic solvent, where the electrolyte lithium salt includes one or more of lithium trifluoromethanesulfonate, lithium bis(trifluoromethanesulfonyl)imide, lithium difluorophosphate and lithium difluoro(oxalato)borate; the additive includes one or more of 2-trimethylsilylethyl2-cyanoacetate, diphenyldimethoxysilane and citraconic anhydride; and the organic solvent includes a carbonate solvent and a glycol ether solvent.

Through the selection and combination of the electrolyte lithium salt, the additive and the solvent, the present invention can meet all the requirements of normal-temperature discharge, high-rate discharge and high-temperature discharge when applied in lithium primary batteries. In comparison with lithium perchlorate, lithium trifluoromethanesulfonate and lithium bis(trifluoromethanesulfonyl)imide have no strong oxidizing property and have higher ionic conductivity; lithium difluorophosphate and lithium difluoro(oxalato)borate can react with a aluminum foil on a cathode current collector of a cylindrical type lithium-manganese dioxide primary battery to form a passivating film on its surface, so that other corrosive substances can be prevented from corroding the aluminum foil, avoiding battery failure caused by low voltage and high internal resistance of the battery; 2-trimethylsilylethyl2-cyanoacetate, diphenyldimethoxysilane and citraconic anhydride can participate in the formation process of the passivating film on a manganese dioxide cathode material, so as to increase the film quality of the passivating film and high-temperature performance; with the optimal selection of the solvents, not only can the dissociation degree and conductivity of the lithium salt be increased, but also flame-retardant performance is achieved to a certain degree; and thus, the comprehensive performance of the electrolyte in lithium primary batteries is optimized, so the electrolyte has a broad application prospect in future lithium-manganese dioxide primary batteries.

Preferably, the concentration of the electrolyte lithium salt is 0.1 mol/L to 2 mol/L, e.g. 0.1 mol/L, 0.2 mol/L, 0.3 mol/L , 0.4 mol/L, 0.5 mol/L, 0.6 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L or 2 mol/L.

Preferably, the additive accounts for 0.5% to 15% (e.g. 0.5%, 1%, 2%, 3%, 4%, 5%, 6%, 7%, 8%, 9% or 10%) of the total weight of the electrolyte.

Preferably, the electrolyte lithium salt includes a combination of two or more of lithium trifluoromethanesulfonate, lithium bis(trifluoromethanesulfonyl)imide, lithium difluorophosphate and lithium difluoro(oxalato)borate.

Preferably, the electrolyte lithium salt also includes other electrolyte lithium salt, which includes one or more of lithium tetrafluoroborate, lithium perchlorate, lithium bis(oxalate)borate, lithium bis(fluorosulfonyl)imide and lithium hexafluorophosphate.

Further preferably, the concentration of the other electrolyte lithium salt is 0.01 mol/L to 1 mol/L, e.g. 0.01 mol/L, 0.05 mol/L, 0.1 mol/L, 0.2 mol/L, 0.3 mol/L, 0.4 mol/L, 0.5 mol/L, 0.6 mol/L, 0.7 mol/L, 0.8 mol/L, 0.9 mol/L or 1 mol/L.

Further preferably, the additive includes a combination of two or three of 2-trimethylsilylethyl2-cyanoacetate, diphenyldimethoxysilane and citraconic anhydride, that is, the additive at least includes any two of 2-trimethylsilylethyl2-cyanoacetate, diphenyldimethoxysilane and citraconic anhydride.

Preferably, the additive also includes other additives, which are 2,6-di-tert-butyl-4-methylphenol and/or 3,5-dimethylisoxazole.

Further preferably, the other additives account for 0.001% to 5% (e.g. 0.001%, 0.01%, 0.05%, 0.1%, 0.5%, 1%, 1.5%, 2%, 2.5%, 3%, 3.5%, 4%, 4.5% or 5%) of the total weight of the electrolyte.

Preferably, the carbonate solvent is selected from one or more of ethylene carbonate, propylene carbonate, dimethyl carbonate, diethyl carbonate and methyl ethyl carbonate.

Preferably, the glycol ether solvent is selected from one or more of ethylene glycol dimethyl ether, diethylene glycol dimethyl ether, triethylene glycol dimethyl ether and tetraethylene glycol dimethyl ether.

Preferably, the weight ratio of the carbonate solvent to the glycol ether solvent is 1 : (0.5 to 2), e.g. 1 : 0.5, 1 : 0.6, 1 : 0.7, 1 : 0.8, 1 : 0.9, 1 : 1, 1 : 1.1, 1 : 1.2, 1 : 1.3, 1 : 1.4, 1 : 1.5, 1 : 1.6, 1 : 1.7, 1 : 1.8, 1 : 1.9 or 1 : 2.

Preferably, the organic solvent also includes other organic solvent, which is selected from one or more of acetonitrile, γ-butyrolactone, 1,3-dioxolane, 1,4-dioxane, 1,3-dioxane, sulfolane, tetrahydrofuran, methyl butyrate, methyl acetate, ethyl acetate, propyl acetate, methyl propionate, ethyl propionate and propyl propionate.

Further preferably, the other organic solvent is selected from one or more of acetonitrile, 1,3-dioxolane, sulfolane and methyl butyrate.

Further preferably, the weight of the other organic solvent accounts for 10% to 40% (e.g. 10%, 12%, 14%, 16%, 18%, 20%, 22%, 24%, 26%, 28%, 30%, 32%, 34%, 36%, 38% or 40%) of the total weight of the organic solvent.

The present invention also provides a lithium primary battery, which includes a cathode, an anode and an electrolyte, where the electrolyte is the aforementioned electrolyte.

Preferably, the material of the cathode of the lithium primary battery is manganese dioxide, the material of the anode the lithium primary battery is lithium, and the lithium primary battery is shaped like a button, cylinder, square or pouch.

Due to the application of the aforementioned technical solutions, the present invention has the following advantages in comparison with the prior art:
Through the selection and combination of the electrolyte lithium salt, the additive and the solvent, the present invention can meet normal-temperature discharge performance, high-rate discharge performance, high-temperature discharge performance and safety performance when applied in lithium primary batteries, and therefore has a broad application prospect in future lithium-manganese dioxide primary batteries.

### DETAILED DESCRIPTION

The present invention will be further described with reference to examples. However, the present invention is not limited to the following examples. The implementation conditions adopted in the examples may be further adjusted according to the different requirements of specific use, and the unspecified implementation conditions are the conventional conditions in the art. Technical features involved in various embodiments of the present invention may be combined with one other, as long as they do not conflict with one other.

The electrolyte lithium salt in lithium primary batteries in the prior art is usually lithium perchlorate. Although lithium perchlorate has good electrochemical properties at normal temperature, but it limits the wide application of lithium primary batteries due to strong oxidizing property, unsatisfactory discharge performance at high temperature, limited high-rate discharge performance and safety hazards, such as explosibility. If lithium perchlorate is replaced by other lithium salts with higher high-temperature safety, their discharge performance and high-rate discharge performance are limited. In order to overcome the aforementioned problems existing in the prior art, the inventor of this case has conducted long-term research and a lot of practice, proposing the technical solution of this invention.

Specifically, the electrolyte lithium salt in the present invention selects one or more of lithium trifluoromethanesulfonate, lithium bis(trifluoromethanesulfonyl)imide, lithium difluorophosphate and lithium difluoro(oxalato)borate, selects one or more of 2-trimethylsilylethyl2-cyanoacetate, diphenyldimethoxysilane and citraconic anhydride as additives and also uses an organic solvent compounded by a carbonate solvent and a glycol ether solvent, optimizing the comprehensive performance of the electrolyte in lithium primary batteries. The electrolyte has excellent discharge performance under normal temperature and can also inhibit the gas expansion and internal resistance increase of lithium primary batteries under high temperature, thus increasing the high-temperature performance, high-rate discharge performance and safety performance of lithium primary batteries.

The technical solution and an implementation process and principle thereof will be further illustrated below.

In order to compare the effects of electrolytes more visually, button type 2032 lithium-manganese dioxide primary batteries and cylindrical type CR123A lithium-manganese dioxide primary batteries were used as the batteries in the following comparative examples and examples.

### Comparative Example 1

The organic solvents were propylene carbonate and ethylene glycol dimethyl ether (the weight ratio of the two was 30: 70); the electrolyte lithium salt was lithium trifluoromethanesulfonate, and the concentration of the lithium salt was 1 mol/L. No other additives were added.

### Comparative Example 2

The organic solvents were propylene carbonate, diethylene glycol dimethyl ether and 1,3-dioxolane (the weight ratio of the three was 20: 30: 50); the electrolyte lithium salt was lithium perchlorate, and the concentration of the lithium salt was 1.1 mol/L.

### Comparative Example 3

The organic solvents were propylene carbonate, ethylene glycol dimethyl ether and 1,3-dioxolane (the weight ratio of the three was 40: 30: 30); the electrolyte lithium salt was lithium perchlorate, the concentration of the lithium salt was 0.9 mol/L; and 1% by weight of citraconic anhydride was added.

### Comparative Example 4

The organic solvents were ethylene carbonate, propylene carbonate and triethylene glycol dimethyl ether (the weight ratio of the three was 5: 25: 70); the electrolyte lithium salt was lithium trifluoromethanesulfonate, and the concentration of the lithium salt was 0.8 mol/L. No other additives were added.

### Comparative Example 5

The organic solvents were ethylene carbonate, propylene carbonate and ethylene glycol dimethyl ether (the weight ratio of the three was 8: 32: 60); and the electrolyte lithium salts were 0.5 mol/L of lithium trifluoromethanesulfonate and 0.2 mol/L of lithium hexafluorophosphate. No other additives were added.

### Example 1

The organic solvents were ethylene carbonate, propylene carbonate and ethylene glycol dimethyl ether (the weight ratio of the three was 5: 25: 70); the electrolyte lithium salts were 0.5 mol/L of lithium trifluoromethanesulfonate and 0.3 mol/L of lithium bis(trifluoromethanesulfonyl)imide; and the additive was 0.5% of 2-trimethylsilylethyl2-cyanoacetate.

### Example 2

The organic solvents were ethylene carbonate, propylene carbonate, ethylene glycol dimethyl ether and 1,3-dioxolane (the weight ratio of the four was 8: 25: 27: 40); the electrolyte lithium salts were 0.7 mol/L of lithium bis(trifluoromethanesulfonyl)imide and 0.1 mol/L of lithium difluoro(oxalato)borate; and the additives were 0.5% of 2-trimethylsilylethyl2-cyanoacetate and 0.5% of diphenyldimethoxysilane.

### Example 3

The organic solvents were ethylene carbonate, propylene carbonate, diethylene glycol dimethyl ether and sulfolane (the weight ratio of the four was 8: 35: 47: 10); the electrolyte lithium salts were 0.5 mol/L of lithium bis(trifluoromethanesulfonyl)imide and 0.05 mol/L of lithium difluorophosphate; and the additives were 1% of 2-trimethylsilylethyl2-cyanoacetate and 0.5% of citraconic anhydride.

### Example 4

The organic solvents were acetonitrile, propylene carbonate, diethylene glycol dimethyl ether and methyl butyrate (the weight ratio of the four was 8: 35: 47: 10); the electrolyte lithium salts were 0.8 mol/L of lithium bis(trifluoromethanesulfonyl)imide and 0.05 mol/L of lithium difluorophosphate; and the additives were 1% of 2-trimethylsilylethyl2-cyanoacetate, 0.5% of diphenyldimethoxysilane and 0.3% of citraconic anhydride.

### Example 5

The organic solvents were propylene carbonate, ethylene glycol dimethyl ether, 1,3-dioxolane and sulfolane (the weight ratio of the four was 25: 35: 25: 15); the electrolyte lithium salts were 0.6 mol/L of lithium trifluoromethanesulfonate, 0.4 mol/L of lithium bis(fluorosulfonyl)imide and 0.1 mol/L of lithium bis(oxalate)borate; and the additives were 0.02% of 2,6-di-tert-butyl-4-methylphenol, 1.5% of diphenyldimethoxysilane and 3% of citraconic anhydride.

### Example 6

The organic solvents were ethylene carbonate, propylene carbonate, ethylene glycol dimethyl ether, 1,3-dioxolane and sulfolane (the weight ratio of the five was 5: 20: 35: 25: 15); the electrolyte lithium salts were 0.5 mol/L of lithium trifluoromethanesulfonate, 0.3 mol/L of lithium bis(trifluoromethanesulfonyl)imide, 0.1 mol/L of lithium difluorophosphate and 0.05 mol/L of lithium difluoro(oxalato)borate; and the additives were 0.05% of 3,5-dimethylisoxazole, 3% of 2-trimethylsilylethyl2-cyanoacetate, 2% of diphenyldimethoxysilane and 0.1% of citraconic anhydride.

### Example 7

The organic solvents were ethylene carbonate, propylene carbonate, ethylene glycol dimethyl ether and 1,3-dioxolane (the weight ratio of the four was 10: 20: 35: 35); the electrolyte lithium salts were 0.5 mol/L of lithium bis(trifluoromethanesulfonyl)imide, 0.1 mol/L of lithium perchlorate and 0.1 mol/L of lithium difluorophosphate; and the additives were 0.01% of 3,5-dimethylisoxazole, 0.5% of citraconic anhydride and 3% of 2-trimethylsilylethyl2-cyanoacetate.

### Example 8

The organic solvents were ethylene carbonate, propylene carbonate, ethylene glycol dimethyl ether and methyl butyrate (the weight ratio of the four was 10: 20: 35: 35); the electrolyte lithium salts were 0.5 mol/L of lithium bis(trifluoromethanesulfonyl)imide, 0.1 mol/L of lithium perchlorate and 0.1 mol/L of lithium difluoro(oxalato)borate; and the additives were 1% of diphenyldimethoxysilane and 5% of citraconic anhydride.

### Example 9

The organic solvents were ethylene carbonate, propylene carbonate and ethylene glycol dimethyl ether (the weight ratio of the three was 10: 50: 40); the electrolyte lithium salts were 1.2 mol/L of lithium bis(trifluoromethanesulfonyl)imide, 0.1 mol/L of lithium hexafluorophosphate and 0.1 mol/L of lithium difluoro(oxalato)borate; and the additives were 3% of citraconic anhydride, 1% of diphenyldimethoxysilane and 2% of 2-trimethylsilylethyl2-cyanoacetate.

### Example 10

The organic solvents were propylene carbonate, ethylene glycol dimethyl ether and sulfolane (the weight ratio of the three was 55: 35: 10); the electrolyte lithium salts were 0.8 mol/L of lithium trifluoromethanesulfonate, 0.6 mol/L of lithium bis(trifluoromethanesulfonyl)imide and 0.1 mol/L of lithium difluorophosphate; and the additives were 1.5% of 2-trimethylsilylethyl2-cyanoacetate and 5% of diphenyldimethoxysilane.

### Experimental Results

Tests of Constant-resistance Discharge, Discharge after Storage under High Temperature, High-current Discharge and Flame Retardance:
The discharge performances of the batteries were tested using a battery tester from NEWARE.

The five comparative examples and the twelve examples were prepared into electrolytes according to the formulas, the electrolytes were injected into the button type CR2032 lithium-manganese dioxide primary batteries and the cylindrical type CR123A lithium-manganese dioxide primary batteries, and the batteries were then tested for normal-temperature constant-resistance discharge, discharge after 20 days of storage under 60 °C, high-current pulse discharge and flame retardance respectively.

A test method for normal-temperature constant-resistance discharge was as follows: under normal temperature, the batteries discharged at a constant resistance of 1 KΩ until a cut-off voltage of 2.0 V;

A test method for discharge after 20 days of storage under a high temperature of 60 °C was as follows: the batteries were stored in an oven at 60°C for 20 days, and were taken out to discharge at a constant current of 1000 mA under normal temperature until 2.0 V;

A test method for high-current pulse discharge was as follows: under normal temperature, the batteries discharged at a constant current of 3 A for 3 seconds, was put aside for 27 seconds, and cyclically discharged until the voltage reached 1.8 V;

A test method for flame retardance was as follows: enough electrolyte was absorbed by degreasing cotton, and the degreasing cotton was directly ignited with a fire source.

The test results of all the comparative examples and examples are shown in Table 1.

**Table 1**

| Comparative Examples and Examples | Normal-temperature Constant-resistance (1 KΩ) Discharge (CR2032) | 1000 mADischarge Capacity after 20 Days of Storage under High Temperature of 60 °C (CR123A) | High-current (3 A) Pulse Discharge Capacity (CR123A) |
|---|---|---|---|
| Comparative Example 1 | 203.5 mAh | 708.3 mAh | 536.9 mAh |
| Comparative Example 2 | 210.8 mAh | 729.9 mAh | 553.4 mAh |
| Comparative Example 3 | 212.3 mAh | 743.2 mAh | 565.7 mAh |
| Comparative Example 4 | 206.5 mAh | 721.2 mAh | 546.3 mAh |
| Comparative Example 5 | 216.7 mAh | 745.2 mAh | 628.6 mAh |
| Example 1 | 219.3 mAh | 905.2 mAh | 742.1 mAh |
| Example 2 | 226.4 mAh | 981.6 mAh | 750.2 mAh |
| Example 3 | 222.6 mAh | 915.3 mAh | 743.7 mAh |
| Example 4 | 225.5 mAh | 950.9 mAh | 763.2 mAh |
| Example 5 | 221.6 mAh | 826.9 mAh | 737.4 mAh |
| Example 6 | 226.2 mAh | 908.2 mAh | 756.9 mAh |
| Example 7 | 228.5 mAh | 1097.6 mAh | 912.2 mAh |
| Example 8 | 226.8 mAh | 993.3 mAh | 889.7 mAh |
| Example 9 | 232.6 mAh | 1204.2 mAh | 986.5 mAh |
| Example 10 | 222.4 mAh | 911.2 mAh | 779.5 mAh |

The results of the flame retardance test are shown in Table 2.

**Table 2**

| Comparative Examples and Examples | Electrolyte Ignition Experiment |
|---|---|
| Comparative Example 1 | ignited |
| Comparative Example 2 | ignited |
| Comparative Example 3 | ignited |
| Comparative Example 4 | ignited |
| Comparative Example 5 | ignited |
| Example 1 | ignited |
| Example 2 | ignited |
| Example 3 | ignited |
| Example 4 | ignited |
| Example 5 | ignited |
| Example 6 | not ignited |
| Example 7 | ignited |
| Example 8 | ignited |
| Example 9 | not ignited |
| Example 10 | not ignited |

As shown in Table 1, the difference between the button type CR2032 lithium-manganese dioxide primary batteries in terms of the normal-temperature constant-resistance (1 KΩ) discharge capacities in each example and each comparative example is little, so it can be known that the electrolyte of each formula can release a certain capacity under normal temperature and low current, and the requirement for conductivity is not high. In contrast, the difference between the cylindrical type CR123A lithium-manganese dioxide primary batteries in terms of pulse discharge performance and discharge performance after storage under high temperature is significant, the optimization of the electrolyte lithium salt and the selection of the additive have a positive impact on the lithium primary batteries in terms of discharge capacity after storage under high temperature and high-current (3 A) pulse discharge capacity, and the optimization of the electrolyte lithium salt combination, such as the addition of a small amount of lithium hexafluorophosphate, lithium perchlorate or lithium difluoro(oxalato)borate, can form a passivating film on the aluminum foil of the current collector, preventing other corrosive substances from corroding the aluminum foil and helping to increase the conductivity of the electrolytes to a certain degree. Although the conductivity of lithium trifluoromethanesulfonate is not as good as that of lithium perchlorate as a conventional lithium salt, lithium trifluoromethanesulfonate does not have the strong oxidizing property of lithium perchlorate, and has excellent thermal stability, the stable anions of lithium trifluoromethanesulfonate can improve the structure and composition of the passivating layer at the interface between the electrolyte and the anode material to stabilize the electrode, reduce the self-discharge of the battery and increase high-temperature performance and safety. The anion radius of lithium bis(trifluoromethanesulfonyl)imide is greater than the perchlorate radius, the dissociation degree of lithium bis(trifluoromethanesulfonyl)imide is higher than that of lithium perchlorate, and the number of migrating lithium ions is increased, thus effectively increasing the conductivity of the electrolyte, effectively improving the power of the battery; and lithium bis(trifluoromethanesulfonyl)imide is stable to water and does not have strong oxidizing property, increasing safety performance. Lithium difluorophosphate can also play the role of a low-impedance film-forming additive, and also increases both normal-temperature discharge performance and high-power discharge performance. A specific performance of the battery can be increased by adding a single functional additive, and all the performances of the battery can be comprehensively increased by adding a variety of additives in synergistic combination and optimizing the lithium salt combination. Prior to the oxidative decomposition of the solvent, citraconic anhydride added can form a solid electrolyte interface film on the surface of the cathode material, and can inhibit residual alkali to reduce the decomposition of the solvent caused by the residual alkali, ensuring the performance of the battery. Diphenyldimethoxysilane, which has a high redox potential, can effectively increase the safety of the battery under the condition of high temperature or overcharge by forming a polymer film on the surface of the cathode, and can increase high-temperature performance. 2-trimethylsilylethyl2-cyanoacetate can be polymerized with a carbonate solvent decomposition product under a high potential and deposited on the surface of the cathode material to form a passivating film, thus stabilizing the battery system and increasing both the safety and high-temperature performance of the battery. In addition, the results of the electrolyte ignition experiments in some examples show "not ignited", indicating that flame-retardant performance is significantly increased, so safety performance is better.

The aforementioned embodiments are merely intended to describe the technical concept and characteristics of the present invention. Their purpose is to enable those familiar with this technique to comprehend and implement the content of the present invention, without limiting the protection scope of the present invention. All equivalent changes or modifications made according to the spirit and essence of the present invention shall fall within the protection scope of the present invention.

## Claims

1. An electrolyte, **characterized in that**, it comprises an electrolyte lithium salt, an additive and an organic solvent, wherein the electrolyte lithium salt comprises one or more of lithium trifluoromethanesulfonate, lithium bis(trifluoromethanesulfonyl)imide, lithium difluorophosphate and lithium difluoro(oxalato)borate; the additive comprises one or more of 2-trimethylsilylethyl2-cyanoacetate, diphenyldimethoxysilane and citraconic anhydride; and the organic solvent comprises a carbonate solvent and a glycol ether solvent.

2. The electrolyte according to claim 1, **characterized in that**, the concentration of the electrolyte lithium salt is 0.1 mol/L to 2 mol/L.

3. The electrolyte according to claim 1, **characterized in that**, the additive accounts for 0.5% to 15% of the total weight of the electrolyte.

4. The electrolyte according to claim 1, **characterized in that**, the electrolyte lithium salt comprises a combination of two or more of lithium trifluoromethanesulfonate, lithium bis(trifluoromethanesulfonyl)imide, lithium difluorophosphate and lithium difluoro(oxalato)borate.

5. The electrolyte according to claim 1, **characterized in that**, the electrolyte lithium salt further comprises other electrolyte lithium salt, which comprises one or more of lithium tetrafluoroborate, lithium perchlorate, lithium bis(oxalate)borate, lithium bis(fluorosulfonyl)imide and lithium hexafluorophosphate.

6. The electrolyte according to claim 5, **characterized in that**, the concentration of the other electrolyte lithium salt is 0.01 mol/L to 1 mol/L.

7. The electrolyte according to claim 1, **characterized in that**, the additive comprises a combination of two or three of 2-trimethylsilylethyl2-cyanoacetate, diphenyldimethoxysilane and citraconic anhydride.

8. The electrolyte according to claim 1, **characterized in that**, the additive further comprises other additives, which are 2,6-di-tert-butyl-4-methylphenol and/or 3,5-dimethylisoxazole.

9. The electrolyte according to claim 8, **characterized in that**, the other additives account for 0.001% to 5% of the total weight of the electrolyte.

10. The electrolyte according to claim 1, **characterized in that**, the carbonate solvent is selected from one or more of ethylene carbonate, propylene carbonate, dimethyl carbonate, diethyl carbonate and methyl ethyl carbonate; and the glycol ether solvent is selected from one or more of ethylene glycol dimethyl ether, diethylene glycol dimethyl ether, triethylene glycol dimethyl ether and tetraethylene glycol dimethyl ether.

11. The electrolyte according to claim 10, **characterized in that**, the weight ratio of the carbonate solvent to the glycol ether solvent is 1: (0.5 to 2).

12. The electrolyte according to claim 1, **characterized in that**, the organic solvent further comprises other organic solvent, which is selected from one or more of acetonitrile, γ-butyrolactone, 1,3-dioxolane, 1,4-dioxane, 1,3-dioxane, sulfolane, methyl butyrate, tetrahydrofuran, methyl acetate, ethyl acetate, propyl acetate, methyl propionate, ethyl propionate and propyl propionate.

13. The electrolyte according to claim 12, **characterized in that**, the weight of the other organic solvent accounts for 10% to 40% of the total weight of the organic solvent.

14. A lithium primary battery, comprising a cathode, an anode and an electrolyte, **characterized in that**, the electrolyte is the electrolyte according to any of claims 1 to 13.

15. The lithium primary battery according to claim 14, **characterized in that**, the material of the cathode is manganese dioxide, the material of the anode is lithium, and the lithium primary battery is shaped like a button, cylinder, square or pouch.
